Europäisches Patentamt

European Patent Office

Office européen des brevets

(11) Publication number: **0 296 886**
**A2**

# (12) EUROPEAN PATENT APPLICATION

(21) Application number: **88305807.5**

(22) Date of filing: **23.06.88**

(51) Int. Cl.⁴: **G 01 F 23/22**

(30) Priority: **26.06.87 GB 8715083**

(43) Date of publication of application:
**28.12.88 Bulletin 88/52**

(84) Designated Contracting States: **DE FR GB**

(71) Applicant: **FORD MOTOR COMPANY LIMITED**
**Eagle Way**
**Brentwood Essex CM13 3BW (GB)**

(84) Designated Contracting States: **GB**

(71) Applicant: **FORD FRANCE S. A.**
**B.P. 307**
**F-92506 Rueil-Malmaison Cedex (FR)**

(84) Designated Contracting States: **FR**

(71) Applicant: **FORD-WERKE AKTIENGESELLSCHAFT**
**Werk Köln-Niehl Henry-Ford-Strasse Postfach 60 40 02**
**D-5000 Köln 60 (DE)**

(84) Designated Contracting States: **DE**

(72) Inventor: **Fleetham, Nicholas Richard**
**113 Goshawk Drive**
**Chelmsford Essex (GB)**

(74) Representative: **Messulam, Alec Moses et al**
**A. Messulam & Co. 24 Broadway**
**Leigh on Sea Essex SS9 1BN (GB)**

(54) **A liquid level indicating device.**

(57) A liquid level indicating device such as the fuel gauge 10 in a motor vehicle is of the type which does not return to zero when the ignition 24 is switched off. In order to prevent false readings arising when the fuel in the tank sloshes about, a tilt switch 22 is provided in series with the ignition switch to disconnect the power to the fuel gauge 10, which then continues to register the previous reading, if the motion or attitude of the vehicle changes. The tilt switch will close again once the vehicle returns to its normal operating state, and power will be restored to the gauge which then reverts to direct reading of the signal from a sender unit 28 in the fuel tank.

EP 0 296 886 A2

## Description

## A LIQUID LEVEL INDICATING DEVICE

This invention relates to a liquid level indicating device and, in particular, to a device for indicating the fuel level in a motor vehicle tank.

A known problem with motor vehicle fuel level indicators is that the signal sent to the gauge on the dash-board from the sender unit in the tank varies as the fuel sloshes about in the tank, for example when the vehicle is cornering, and thus the reading on the fuel gauge varies depending on the orientation and acceleration of the vehicle.

The present invention seeks to provide a gauge which is not sensitive to such fluctuations.

According to the present invention, there is provided a device for indicating the fluid level in a motor vehicle tank, the device including a sender unit and a gauge, characterised in that the gauge is of the non-return type, and in that a tilt switch mounted in the vehicle is arranged to disconnect the power supply to the device in response to excessive inclination, acceleration or deceleration of the vehicle.

Fuel gauges are known where the gauge has built-in memory and the reading on the gauge does not return to zero when the signal to it is turned off. Such gauges, which are herein termed gauges of the non-return type, have been fitted in Ford Sierra cars from the 1987 model year. These gauges make use of interacting magnetic fields, and when the ignition is switched off the magnetic fields are reduced to zero and there is no restoring force which would zero the gauge. The gauge therefore continues to register the reading which applied at the moment the ignition was switched off.

Complex solutions to the problem of inaccurate readings from the fuel gauge are to be found in the prior art.

GB 2 054 162 and GB 1 373 345, have suggested the use of additional circuitry to store the signal displayed by the gauge and to process the signal from the sender unit in dependence upon the last stored and displayed reading in order to avoidance fluctuations of the reading. The present invention makes use of the built-in memory of gauges of the non-return type to provide a simpler, less expensive and inherently more reliable solution to this problem.

The tilt switch is preferably a horizontally mounted mercury switch, where a conducting path between two switch contacts is broken if the inclination of the vehicle changes by more than a certain amount, or if an acceleration above a certain level is applied to the vehicle. In such a case, the gauge continues to register the reading which applied immediately prior to the change in inclination or acceleration, until the state of the vehicle returns to a regular condition whereupon the tilt switch once again closes to supply power to the device.

The gauge preferably comprises two coils at 90° to one another, with one coil being connected to the ignition current to produce a constant magnetic field, and the other coil being connected to the sender unit to receive a varying signal from the unit to produce a varying magnetic field depending on the signal, and a magnetic member arranged in the field produced by the coils and adapted to move over a scale in accordance with the combined magnetic field produced by the two coils.

The invention will now be further described, by way of example with reference to the accompanying drawings, in which:

Figure 1 is a schematic circuit diagram of an indicating device in accordance with the invention; and

Figure 2 is a view on the rear of an instrument panel unit showing some details of a practical embodiment of the device.

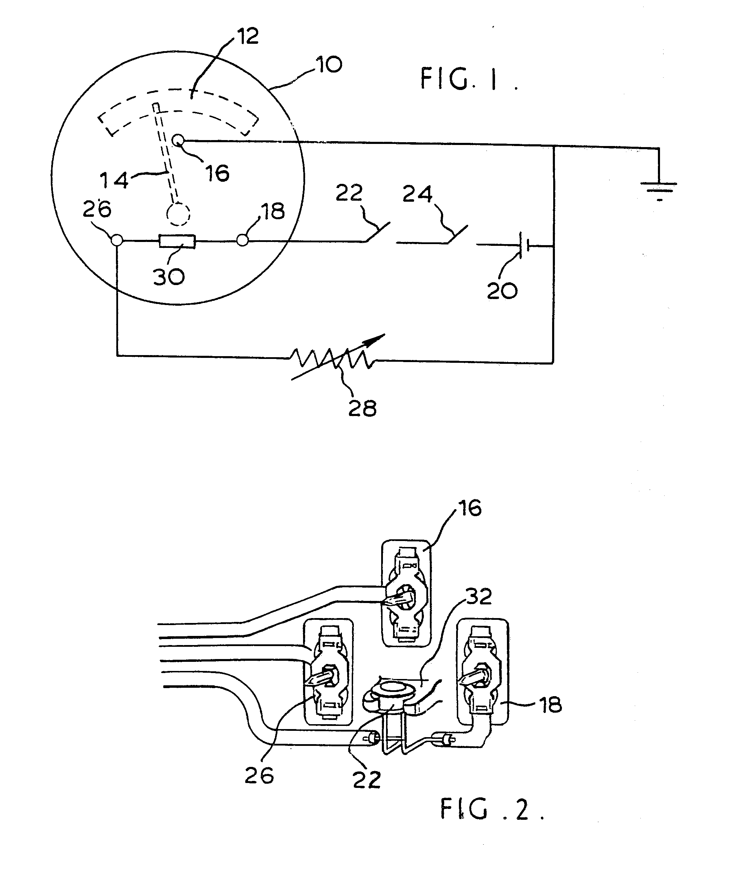

Figure 1 shows a gauge 10 with a scale 12 and a needle 14 indicated in dotted lines. The gauge has three terminals. The terminal 16 is the earth or return connection. The terminal 18 is connected to a 12 volt power signal from a battery 20 via two switches 22 and 24. The terminal 26 is connected to a variable resistance 28 which is provided in the fuel tank sender unit. A calibration resistance 30 is connected between the terminals 18 and 26.

The switch 24 is the conventional ignition switch for the vehicle and will be closed whilst the vehicle is running. The switch 22 is a normally closed tilt switch which will remain closed while the vehicle is in a horizontal position and during unexceptional conditions of acceleration or deceleration. However if the vehicle is on a slope, or if it accelerates or decelerates at an exceptional rate, then the tilt switch 22 will open thereby opening the circuit and preventing current from the battery 20 from reaching the terminals 18 or 26.

The gauge 10 is of the non-return type. The needle 14 is linked by a shaft to a magnetic disc. The magnetic disc is surrounded by coils of wire wound onto a plastic bobbin. There are two sets of coils at 90° to one another. One is a double winding which passes a constant current when the switches 22 and 24 are both closed; this produces a constant magnetic field at 90° to these coils which form the "ignition" winding.

The other set of coils (the "sensor winding") are connected to the variable resistance 28 of the fuel tank sender unit and a variable current depending upon the resistance at any time of the resistor 28 is passed through this winding. The strength of the generated magnetic field depends upon the size of the current reaching the terminal 26 and again its orientation is at 90° to the sensor winding.

The two sets of windings produce magnetic fields at right angles to one another. The combined effect of these is to produce an overall magnetic field with an orientation somewhere between the two; with a low current in the sensor windings this orientation is close to that produced in the field of the ignition windings; with a high current it is close to the field produced by the sensor windings.

The magnetic disc connected to the needle has its poles arranged such that when the ignition is on and there is no current in the sensor winding, the needle gives a zero reading. As the current in the sensor winding increases, the orientation of the overall field swings round causing the magnetic disc and the needle to rotate.

When either of the switches 22 and 24 is opened (resulting from a change in orientation of the vehicle or from the ignition being switched off) then current will immediately stop being passed through both the ignition and the sensor windings. There will however be no restoring force which would thereafter move the needle 14, so the needle will remain in the position at which it was set immediately prior to the opening of the circuit.

In this way, the gauge will only respond to a signal from the sender unit when the vehicle is in a normal orientation. At other times, the reading on the gauge will be "historical" and will refer to the signal received at the last time when the vehicle was in its normal orientation. In practice the interval between such readings will be extremely small, and not noticeable from an observation of the gauge.

Figure 2 shows a view of the back of a casing which incorporates the gauge 10, and indicates the positions of the terminals 16, 18 and 26. The tilt switch 22 is mounted in a bracket 32 arranged so that the switch will be horizontal when the vehicle is horizontal. The sensitivity of the switch can be chosen in accordance with the desired characteristics, but it is likely that a switch which goes open circuit at an inclination of 5° from the horizontal would be suitable for this device.

The gauge described can include damping to prevent excessive oscillation of the needle. The presence of the tilt switch however will substantially reduce the likelihood of oscillation, and thus the amount of damping needed can be considerably reduced or even omitted.

### Claims

1. A device for indicating the fluid level in a motor vehicle tank, the device including a sender unit (28) and a gauge (10), characterised in that the gauge (10) is of the non-return type, and in that a tilt switch (22) mounted in the vehicle is arranged to disconnect the power supply to the device in response to excessive inclination, acceleration or deceleration of the vehicle.

2. A device as claimed in Claim 1, wherein the tilt switch is a horizontally mounted mercury switch, where a conducting path between two switch contacts is broken if the inclination of the vehicle changes by more than a predetermined amount, or if an acceleration or deceleration exceeding a predetermined level is applied to the vehicle.

3. A device as claimed in Claim 1 or Claim 2, wherein the gauge (10) comprises two coils at 90° to one another, with one coil being connected to the ignition current to produce a constant magnetic field, and the other coil being connected to the sender unit (28) to receive a varying signal from the unit to produce a varying magnetic field depending on the signal, and a magnetic member arranged in the field produced by the coils and adapted to move over a scale in accordance with the combined magnetic field produced by the two coils.

4. A device as claimed in any preceding claim, wherein the tilt switch is mounted on a bracket (32) on the casing of the gauge (10).

0296886

FIG. 1.

FIG. 2.